# EUROPEAN PATENT APPLICATION

(11) **EP 0 741 381 A2**
(43) Date of publication of application: **06.11.1996**
(21) Application number: 96105907.8
(22) Date of filing: 15.04.1996
(51) Int. Cl.: G11B 5/704

(54) **Magnetic recording disk and magnetic recording and reproducing method**

(30) Priority: 14.04.1995 JP 113868/95
(71) Applicant: FUJI PHOTO FILM CO., LTD., Kanagawa (JP)
(72) Inventor: Endo, Yasushi, c/o Fuji Photo Film Co., Ltd., Minami-ashigara-shi, Kanagawa (JP); Niitsuma, Kazuhiro, c/o Fuji Photo Film Co., Ltd., Minami-ashigara-shi, Kanagawa (JP)
(74) Representative: Grünecker, Kinkeldey, Stockmair & Schwanhäusser Anwaltssozietät

(57) **Abstract**

A magnetic recording disk having a flexible non-magnetic support, a non-magnetic layer of 0.5 to 5 µm thick which is arranged on the support and is composed of a non-magnetic inorganic powder, a lubricant and carbon black in a binder, and a magnetic layer of 0.02 to 0.5 µm thick which is composed of a ferromagnetic powder and a lubricant in a binder and has been formed on the non-magnetic layer when the non-magnetic layer has had wet surface is improved by the use of a non-magnetic inorganic powder having two or more kinds of non-magnetic inorganic powders of different mean particle sizes, one of which has a mean particle size of 10-80% of the thickness of the non-magnetic layer and another of which has a mean particle size of 0.5-10% of the thickness of the non-magnetic layer. The former large powder and the latter small powder should be contained in a weight ratio of 3:97 to 40:60.

## Description

### FIELD OF THE INVENTION

The present invention relates to a magnetic recording disk which comprises a flexible non-magnetic support, a non-magnetic layer having a non-magnetic powder dispersed therein, and a magnetic layer having a ferromagnetic powder dispersed therein which is superposed on the non-magnetic layer, in which the magnetic layer has been formed on the non-magnetic layer under the condition that the non-magnetic layer still has had wet surface, and further relates to a magnetic recording and reproducing method employing the said magnetic recording disk. Particularly, the invention relates to a magnetic recording disk which is favorably employable for high density recording and has very high running durability, and to a magnetic recording and reproducing method employing the said magnetic recording disk.

### BACKGROUND OF THE INVENTION

Magnetic recording disks such as floppy disks have been widely employed as external storage devices, with the spread of various office automation apparatuses such as word processors and personal computers. The floppy disk is composed of a flexible non-magnetic support (such as a support of plastic material) and a magnetic layer comprising a magnetic powder such as a ferrite powder. The magnetic layer is generally produced by a coating method or a vapor deposition. A magnetic layer of the vapor deposition type can be formed on a support by vacuum deposition without employment of a binder. Therefore, the magnetic layer of the vapor deposition type is advantageous in that it can be produced to give a thin layer and the thin magnetic layer enables increased high recording density, as compared with the magnetic recording disk produced by a coating method. However, it also has a disadvantage in that its production cost is high.

The magnetic recording disk of the coating type can be produced by coating a magnetic paint for forming a magnetic layer comprising a magnetic powder, a binder and an organic solvent continuously on a support and drying the coated magnetic paint layer. Therefore, the magnetic recording disk of the coating type is advantageous in that its production cost is low, as compared with the magnetic recording disk of the vapor deposition type. However, the coated magnetic layer ought to contain auxiliary materials such as an electroconductive powder, a lubricant and an abrasive so as to impart high performance to the magnetic layer, for instance, to increase its abrasion resistance to a practically satisfactory level and reduce its surface electric resistance. The incorporation of the auxiliary materials into the magnetic layer results in decrease of the amount of the magnetic powder, increase of the thickness of the magnetic layer (e.g., 3 to 6 µm), and thickness loss such as reduction of output. It is known that the thickness loss can be effectively reduced by decreasing the thickness of the magnetic layer. It is also known that the reduced thickness of the magnetic layer further results in increase of recording density. However, if the thickness of the magnetic layer is reduced, it is difficult to incorporate an enough amount of the auxiliary materials such as an electroconductive powder into the magnetic layer. In that case, the surface electric resistance of the magnetic layer is apt to be higher and the endurance decreases. Particularly, if the thickness of the magnetic layer decreases to 2 µm or less, the surface of the magnetic layer is easily influenced by the roughness of the surface of the support whereby the running property deteriorates and the electromagnetic conversion property lowers.

Japanese patent Provisional Publications No. 62-154225 and No. 62-222427 describe a magnetic recording disk having a thinner magnetic layer (0.3 to 1 µm) and a thick subbing layer (non-magnetic layer) which is thicker than the magnetic layer and is provided between the support and the thin magnetic layer, whereby solving the above-mentioned problems. The thick subbing layer can be incorporated with a portion of a non-magnetic powder (abrasive) such as titanium dioxide and a portion of an electroconductive powder (carbon black) which have been previously incorporated into the magnetic layer. Therefore, the magnetic layer can be made thinner (hence, suitable for high density recording), the surface electric resistance is kept low, and the influence of the surface roughness of the support is reduced. Therefore, thus produced magnetic recording disk shows excellent endurance and running property. However, other troubles are caused in the production of the magnetic recording disk having such structure. When the thick subbing layer (non-magnetic layer) is formed on the support by coating an appropriate solution and drying the coated layer and then the thin magnetic layer is formed by coating a magnetic paint on the dried subbing layer, the properties of the produced thin magnetic layer is apt to deteriorate. In more detail, when the magnetic paint for the preparation of the magnetic layer is coated on the dry subbing layer, the subbing layer is apt to swell by absorbing the organic solvent of the magnetic paint and the swelling of the subbing layer causes turbulent flow of the magnetic paint under coating. Such phenomena causes deterioration of the surface smoothness of the resulting magnetic layer and decrease of the electromagnetic conversion property.

Japanese Patent Provisional Publications No. 63-191315, No. H4-325917, No. H5-109061 and No. H6-68453 describe a process for preparing the magnetic recording disk which comprises the steps of: coating on a support a coating dispersion for the non-magnetic layer which contains a non-magnetic powder dispersed in a binder resin solution to form a non-magnetic layer; coating a magnetic paint (i.e., coating dispersion for the magnetic layer which contains a magnetic powder dispersed in a binder resin solution) on the non-magnetic layer while the non-magnetic layer is still wet; and then drying these layers simultaneously. This process enables formation of an extremely thin magnetic layer with little influence of the conditions of the non-magnetic layer. Therefore, the resulting magnetic layer has satisfactory surface smoothness and shows improvement of the electromagnetic conversion property. The above Patent Provisional Publications further describe the incorporation of a lubricant and carbon black (i.e., electroconductive particles) in combination into both layers, i.e., the non-magnetic layer and the magnetic layer of the magnetic recording disk, so as to further improve the electromagnetic conversion properties, anti-static property, and running endurance. Further, description is given for the non-magnetic powder employed for the preparation of the non-magnetic layer of 0.5 to 5 µm thick. According to the description, a non-magnetic powder (e.g., titanium dioxide or α-alumina) has a particle size of approximately 0.3 µm.

The magnetic recording disk is now widely employed in various fields and sometimes is used under unfavorable conditions such as conditions with widely varying temperature and humidity and conditions with a large amount of dusts. Particularly, if the magnetic recording disk is employed under conditions with much dusts, the dusts are easily adsorbed by the disk due to electrostaticity produced in the course of disk running. The adsorbed dusts cause increase of dropouts and sometimes bring about severe troubles. Therefore, the magnetic recording disk is now required to show high reliability and stability even under such severe conditions. Further, requirements for increase of the recording capacity and reduction of the disk size are getting stronger. Therefore, the magnetic recording disk now should ensure, or further improve, high performances on the reproduction output, over-writing property, and running endurance, notwithstanding the requirements for the high recording capacity by the employment of the thinner magnetic layer, Particularly, the thinner magnetic layer such as of not thicker than 0.5 µm likely becomes to lower in its running durability, because the magnetic recording layer of the recording disk is rotated at a high speed in contact with a magnetic head and other members of the disk cartridge. Such rotation of a high speed is required to ensure the desired high recording density.

For the increase of the recording density, Japanese Patent Provisional Publications No. 58-6526 and No. 62-6525 proposes a process utilizing a ferromagnetic powder of a very small size, well dispersed ferromagnetic powder, increase of the density of the ferromagnetic powder in the magnetic layer, and the use of a ferromagnetic having enhanced magnetic properties or a hexagonal ferrite powder. Nevertheless, well satisfactory results are not achieved by the improvement of the magnetic powder alone.

### SUMMARY OF THE INVENTION

The present invention has an object to improve various properties such as anti-static property, electromagnetic conversion properties (e.g., overwriting property and reproduction output), and running endurance of a magnetic recording disk for high density recording which has a magnetic layer formed by coating on a still wet non-magnetic layer (that is, wet-on-wet coating).

Particularly, the invention has an object to provide a magnetic recording disk having high electromagnetic conversion property and high running endurance, and a magnetic recording and reproducing method utilizing the said magnetic recording disk.

The present inventors studied for providing a magnetic recording disk which is appropriately employable for high density recording and shows ensured electromagnetic conversion properties and anti-static property and, specifically, high running endurance. As a result, they have discovered that if the non-magnetic powder to be incorporated into the non-magnetic layer comprises non-magnetic powders of two types, one of which has a relatively small mean particle size (i.e., particle size) and another of which has a relatively large mean particle size, in a specific ratio, the desired magnetic recording disk showing the ensured electromagnetic conversion properties and the improved running endurance can be obtained. The present invention has been made on this discovery.

In particular, the running endurance (or durability) of the magnetic recording disk is enhanced by the use of the plural non-magnetic powders having different mean particle sizes. The reasons are considered as follows: the non-magnetic powder having a relatively high particle size forms spikes which are effective to ensure high running endurance; the combination of these non-magnetic powder of different sizes imparts appropriate smoothness to the non-magnetic layer; the combination is also effective to provide through-holes (i.e., passageways) for smooth movement of the incorporated lubricant from the non-magnetic layer to the surface of the magnetic layer; and the strength of the non-magnetic layer increases due to the filler effect provided by the combination of the plural non-magnetic powder having different particle sizes.

The present invention resides in a magnetic recording disk comprising a flexible non-magnetic support, a non-magnetic layer of 0.5 to 5 µm thick which is arranged on at least one surface of the support and comprises a non-magnetic inorganic powder, a lubricant and carbon black dispersed in a binder, and a magnetic layer of 0.02 to 0.5 µm thick which comprises a ferromagnetic powder and a lubricant dispersed in a binder and has been formed on the non-magnetic layer when the non-magnetic layer has had wet surface, wherein the non-magnetic inorganic powder comprises at least two kinds of non-magnetic inorganic powders having different mean particle sizes, one of which has a mean particle size in the range of 10 to 80% of the thickness of the non-magnetic layer and another of which has a mean particle size in the range of 0.5 to 10% of the thickness of the non-magnetic layer, the former powder and the latter powder being in a weight ratio of 3:97 to 40:60.

The present invention further resides in a magnetic recording and reproducing method which employs the above-described magnetic recording disk of the invention and comprises recording a set of digital signals having a minimum recording wavelength of not longer than 1.5 µm on the magnetic layer of the magnetic recording disk under such condition that a magnetic head is kept in contact with the magnetic layer, and reproducing the recorded digital signals from the magnetic layer udder such condition that a magnetic head is kept in contact with the magnetic layer.

### BRIEF DESCRIPTION OF THE DRAWINGS

Fig. 1 schematically shows a successive double coating method in which one layer is formed and another layer is formed on that layer while it is under wet condition.

Fig. 2 schematically shows a simultaneous double coating method in which plural layers are simultaneously formed on a support using extrusion coating.

### DETAILED DESCRIPTION OF THE INVENTION

The magnetic recording disk of the invention is further described below.

Preferred embodiments of the invention are as follows.
1) The non-magnetic inorganic powder having a mean particle size in the range of 10 to 80% of the thickness of the non-magnetic layer (that is, a large non-magnetic inorganic powder) has a mean particle size in the range of 15 to 75%.
2) The non-magnetic inorganic powder having a mean particle size in the range of 0.5 to 10% of the thickness of the non-magnetic layer (that is, a small non-magnetic inorganic powder) has a mean particle size in the range of 1 to 7%.
3) The mean particle size of one non-magnetic inorganic powder in the non-magnetic layer differs from the mean particle size of another non-magnetic inorganic powder by at least 5% (preferably by at least 10%, more preferably by at least 15%, most preferably by 30 to 80%) of the thickness of the non-magnetic layer.
4) The non-magnetic inorganic powders both have a Mohs hardness of not less than 5, more preferably not less than 6.
5) The ratio of amounts of the large non-magnetic powder and the small non-magnetic powder is in the range of 5:95 to 35:65, preferably 10:90 to 30:70.
6) The carbon black has a mean particle size of not more than 35 mµ, more preferably in the range of 10 to 35 mµ.
7) The carbon black is contained in an amount of 3 to 20 weight parts (more preferably 4 to 18 weight parts, most preferably, 5 to 15 weight parts) per 100 weight parts of the whole non-magnetic inorganic powder in the non-magnetic layer.
8) The thickness of the magnetic layer is in the range of 0.03 to 0.45 µm.
9) The thickness of the non-magnetic layer is in the range of 1.0 to 3.5 µm.
10) The non-magnetic layer and the magnetic layer has been formed by simultaneous double coating.
11) The large non-magnetic organic powder has a Mohs hardness higher than a Mohs hardness of the small non-magnetic inorganic powder.
12) The large non-magnetic inorganic powder has a Mohs hardness higher than a Mohs harness of the small non-magnetic inorganic powder by not less than 2.
13) The large non-magnetic inorganic powder is a powder of α-alumina.
14) The small non-magnetic inorganic powder is a powder of titanium dioxide.

The magnetic layer of the magnetic recording disk according to the invention is formed on the non-magnetic layer while the non-magnetic layer is under wet condition. In more detail, the magnetic layer of the magnetic recording disk of the invention is formed on the non-magnetic layer simultaneously or just after the coating of the non-magnetic layer (coated layer) and while the non-magnetic layer is still wet. This process is named "wet-on-wet" process.

The coating according to the wet-on-wet process can be done, for instance, one of the following manners;
1) The non-magnetic layer is first formed by means of an apparatus for gravure coating, roll coating, blade coating, or extrusion coating, and the magnetic layer is then formed on the coated non-magnetic layer by means of a supported pressure extrusion apparatus while the coated non-magnetic layer is still wet. See Japanese Patent Provisional Publications No. H6-238179 and No. H2-265572, and Japanese Patent Publication No. H1-46186.
2) The non-magnetic layer and the magnetic layer are formed almost simultaneously by means of a coating apparatus equipped with a single head having two extrusion slits. See Japanese Patent Provisional Publications No. 63-88080, No. H2-17921, and No. H2-265672.
3) The non-magnetic layer and the magnetic layer are formed almost simultaneously by means of an extrusion coating apparatus equipped with a back-up roller. See Japanese Patent Provisional Publication No. H2-174965.

When any of the above-mentioned coating processes are employed, the coating solutions (dispersions) are preferably given a shear force inside of the coating head so as to obviate agglomeration of the ferromagnetic powder in the solution and lowering of the electromagnetic conversion property of the resulting magnetic recording disk. See Japanese Patent Provisional Publications No. 62-95174 and No. H1-236968. Preferably, the coating solution has a viscosity in a specific range, as described in Japanese Patent Provisional Publication No. H-8471.

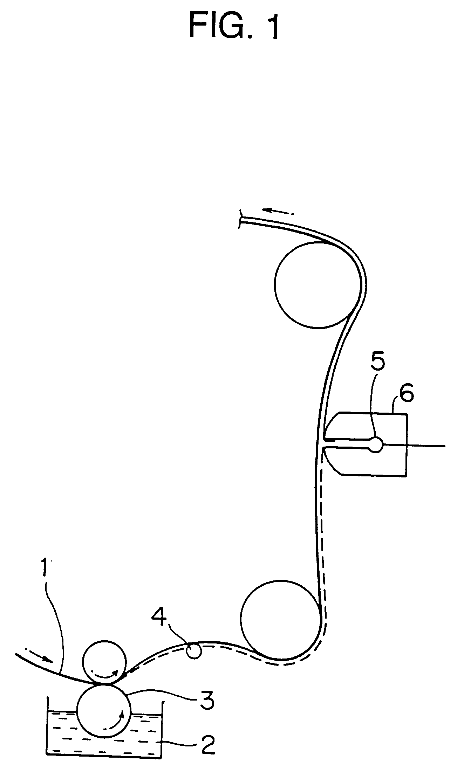

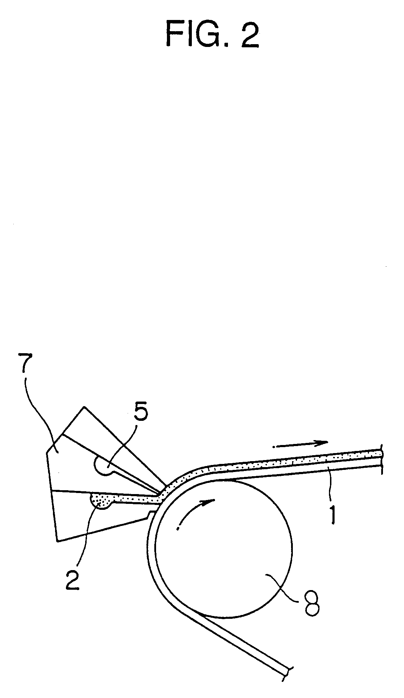

The wet-on-wet coating process is described in more detail by referring to Figures 1 and 2 on the attached drawings.

Figure 1 is a schematic view of the successive coating method which includes forming one coated layer (e.g. non-magnetic layer) and subsequently forming another layer (e.g., magnetic layer) on the coated layer while the latter layer is still wet. As is shown in Figure 1, a continuously running flexible support 1 such as of polyethylene terephthalate is pre-coated with a coating liquid 2 (e.g., coating liquid for forming the non-magnetic layer) using a coating device 3, to form a subbing layer (non-magnetic layer). Just after the pre-coating, the surface of the coated layer is smoothed using a smoothing roller 4, and subsequently a coating liquid 5 (e.g., coating liquid for forming the magnetic layer) is coated on the pre-coated layer using a coating device (extrusion coating device) 6, while the pre-coated layer still is under the wet condition, whereby forming the over-coating layer (magnetic layer).

Figure 2 is a schematic view of the simultaneous coating method which includes forming plural layers at one time according to extrusion coating. As is shown in Figure 2, a continuously running flexible support 1 such as of polyethylene terephthalate is coated with a coating liquid 2 (e.g., coating liquid for forming the non-magnetic layer) and a coating liquid 5 (e.g., coating liquid for forming the magnetic layer) simultaneously by means of a simultaneous plural coating apparatus 7 and a back-up roller 8 to form the non-magnetic layer and the magnetic layer at the same time. The magnetic recording disk of the present invention is preferably produced utilizing the simultaneous plural coating method, from the viewpoint of efficiency in its industrial production.

The combination of the non-magnetic layer and the magnetic layer can be formed on one side or both sides of the non-magnetic support.

The non-magnetic layer has a thickness in the range of 0.5 to 5 µm,preferably 1.0 to 3.5 µm, more preferably 1.0 to 2.0 µm. If the thickness of the non-magnetic layer is less than 0 5 µm, it becomes difficult to incorporate into the non-magnetic layer a lubricant in an amount enough for ensuring high running endurance for a long time. If the thickness of the non-magnetic layer is too large, it becomes difficult to ensure satisfactory surface property of the magnetic layer to be arranged thereon.

The magnetic layer has a thickness in the range of 0.02 to 0.5 µm, preferably 0.03 to 0.45 µm. The thickness of the magnetic layer preferably does not vary or varies within 20% of the thickness of the magnetic layer.

The magnetic recording disk of the invention is characterized in that it has the non-magnetic layer and magnetic layer produced in the above-described manner and that the non-magnetic layer contains at least two kinds of non-magnetic inorganic powder, one of which has a mean particle size in the range of 10 to 80% of the thickness of the non-magnetic layer and another of which has a mean particle size in the range of 0.5 to 10% thereof.

In the invention, the large non-magnetic inorganic powder preferably has a mean particle size in the range of 15 to 75% of the thickness of the non-magnetic layer, and the small non-magnetic inorganic powder preferably has a mean particle size in the range of 1 to 7% thereof.

The difference of the mean particle size of the large non-magnetic inorganic powder and the mean particle size of the small non-magnetic inorganic powder preferably is not less than 5%, preferably not less than 10%, more preferably not less than 15%, mest preferably in the range of 30 to 80%, of the thickness of the non-magnetic layer.

The two or more kinds of the non-magnetic inorganic powders to be employed in the invention preferably have relatively high hardness, such as a Mohs hardness of not less than 5, more preferably of not less than 6. If non-magnetic inorganic powders having different hardness are employed, the hardness of the large non-magnetic inorganic powder preferably is higher than that of the small non-magnetic inorganic powder. In this case, the difference of hardness preferably is 2 or more, more preferably 3 or more.

Moreover, the non-magnetic inorganic powder to be employed in the invention preferably has a tap density of 0.3 to 2 g/cc, a water content of 0.1 to 5%, pH of 2 to 11, and a specific surface area of 1 to 30 m²/g. The non-magnetic inorganic powder can be in any shapes such as acicular, spherical and cubic.

Examples of the non-magnetic inorganic powders employable in the invention include α-alumina (which is converted into the α-phase of 90% or more), β-alumina, γ-alumina, silicon carbide, chromium oxide, cerium oxide, α-iron oxide, corundum, silicon nitride, titanium carbide, titanium dioxide, silicon dioxide (silica), boron nitride, zinc oxide, calcium carbonate, calcium sulfate, and barium sulfate. These powders can he employed singly or in combination. These powders are employed after selection to satisfy the above-described conditions of the mean particle sizes and the difference of hardness. In the present invention, titanium dioxide, α-alumina, α-iron oxide and chromium oxide are preferably employed. Particularly preferred are α-alumina for the large non-magnetic inorganic powder and titanium dioxide for the small non-magnetic inorganic powder.

Concrete examples of the non-magnetic inorganic powders employable in the invention include AKP-10, AKP-12, AKP-15, AKP-18, AKP-20, AKP-30, AKP-50, HIT-50, HIT-55, HIT-60, and HIT-100 (all are available from Sumitomo Chemical Industry Co., Ltd.), G5, G7 and S-1 (all available from Nippon Chemical Industry Co., Ltd.), TTO55 and ET300W (both available from Ishihara Sangyou Co., Ltd.), and STT 30 (available from Titan Industry Co., Ltd.).

In the invention, the powder having a mean particle size of 10 to 80% of the thickness of the non-magnetic layer and the powder having a mean particle size of 0.5 to 10% thereof are contained in the non-magnetic layer at a ratio of 3:97 to 40:60, preferably 5:95 to 35:65, specifically preferably 10:90 to 30:70.

The magnetic recording disk of the invention can be formulated in the conventional manner except that the a combination of the non-magnetic inorganic powders having the specific mean particle sizes. Other materials to be incorporated into the non-magnetic layer and the magnetic layer are described in detail hereinbelow.

The addition of carbon black serves for imparting electroconductivity to the magnetic recording disk to obviate electrostatic deposition and for ensuring smooth surface of the magnetic layer, whereby decreasing spacing loss between the surface of the magnetic layer and the recording/reproducing head to give high output powder. The carbon black to be employed in the invention preferably has a relatively small size such as not are than 35 mµ, are preferably 10 to 35 mµ. The specific surface area of the carbon black preferably is in the range of 5 to 500 m²/g, are preferably 700 to 1,400 m²/g. The DBP oil absorbing capacity preferably is in the range of 10 to 1,500 mL/100 g, more preferably 300 to 1,000 mL/100 g. The carbon black preferably has a pH range of 2 to 10 and a water content of 0.1 to 10%. The tap density of the carbon black preferably is in the range of 0.1 to 1 g/cc. The above-mentioned DBP oil absorption capacity can be determined by adding dibutyl phthalate (DBP) to the carbon black for kneading and observing the kneaded powder with increase of the volume of addition of DBP to check the volume (in terms of mL) of DBP when the powder under dispersion turns into a coagulated mass.

Any of various kinds of carbon blacks produced by various processes can be utilized in the invention. Examples of the carbon blacks include furnace black, thermal black, acetylene black, channel black, and lamp black. Concrete examples of the carbon blacks employable in the invention include BLACKPEARL S 2000, 1300, 1000, 900, 800, 700, VULCAN XC-72 (all available from Cabbot Corporation), #35, #50, #55, #60 and #80 (all available from Asahi Carbon Co., Ltd.), #3950B, #3750B, #3250B, #2400B, #2300B, #1000, #900, #40, #30 and #10B (all available from Mitsubishi Chemical Industries Co., Ltd.), CONDUCTEX SC, RAVEN, 150, 50, 40, 15 (all available from Columbia Carbon Corporation), and Ketchen Black EC, Ketchen Black ECDJ-500 and Ketchen Black ECDJ-600 (all available from Lion-Akzo Co., Ltd.).

The carbon black can be coated with a dispersing agent, grafted with a resin, or graphited on a portio of the surface. The carbon black can be dispersed in a binder before it is added to a coating solution for the formation of the non-magnetic layer. The carbon black can be employed singly or in combination.

Other examples of carbon blacks employable in the invention are seen, for instance, in "Handbook of Carbon Black", in Japanese Language, edited by Society of Carbon Black, published by Tosho Shuppan, 1970).

The amount of carbon black to be incorporated into the non-magnetic layer generally is in the range of 3 to 20 weight parts, preferably 4 to 18 weight parts, more preferably 5 to 15 weight parts, based on 100 weight parts of the whole non-magnetic inorganic powder in the non-magnetic layer. If the amount of carbon black is less than 3 weight parts, the surface resistivity does not satisfactorily lower. If the amount of carbon black is more than 20 weight parts, it becomes not easy to ensure surface smoothness of the magnetic layer.

The lubricant serves reducing friction between the surface of the magnetic layer and the magnetic head and keeping smooth slide contact therebetween. Examples of the lubricants include silicone oils such as dialkyl polysiloxane (alkyl has carbon atoms of 1 to 5), dialkoxy polysiloxane (alkoxy has carbon atoms of 1 to 4), monoalkyl monoalkoxy polysiloxane (alkyl has carbon atoms of 1 to 5 and alkoxy has carbon atoms of 1 to 4), phenyl polysiloxane, and fluoroalkylpolysiloxane (alkyl has carbon atoms of 1 to 5); electroconductive fine powders such as graphite; inorganic powder such as molybdenum disulfide powder and tungsten disulfide powder; plastic fine powders such as powders of polyethylene, polypropylene, polyethylene-vinyl chloride copolymer, and polytetrafluroethylene; α-olefin polymer; unsaturated aliphatic hydrocarbon which is at a liquid state at room temperature (e.g., a compound having a double bond of n-olefin at the end, carbon atoms of approximately 20); fatty acid esters of a mono-basic fatty acid having 12 to 20 carbon atoms and a monohydric alcohol having 3 to 12 carbon atoms; and fluorocarbons. Most preferred are fatty acid esters.

Examples of alcohols employable for preparing suitable fatty acid esters include monohydric alcohols such as ethanol, butanol, phenol, benzyl alcohol, 2-methylbutyl alcohol, 2-hexyldecyl alcohol, propylene glycol monobutyl ether, ethylene glycol monobutyl ether, dipropylene glycol monobutyl ether, diethylene glycol monobutyl ether, and sec-butyl alcohol; and polyhydric alcohols such as ethylene glycol, diethylene glycol, neopentyl glycol, glycerol and sorbitol derivatives. These alcohols can be employed singly or in combination.

Examples of fatty acids include aliphatic carboxylic acids such as acetic acid, propionic acid, octanoic acid, 2-ehtylhexaxoic acid, lauric acid, myristic acid, stearic acid, palmitic acid, behenic acid, arachic acid, oleic acid, linoleic acid, linolenic, elaidic and palmitoleic acid. These fatty acid can be employed singly or in combination.

Concrete examples of the above-mentioned fatty acid esters include butyl stearate, sec-butyl stearate, isopropyl stearate, butyl oleate, amyl stearate, 3-methylbutyl stearate, 2-ethylhexyl stearate, 2-hexyldecyl stearate, butyl palmitate, 2-ethylhexyl myristate, mixture of butyl stearate and butyl palmitate, oleyl oleate, butoxyethyl stearate, 2-butoxy-1-propyl stearate, dipropylene glycol monobutyl ether acylated with stearic acid, diethylene glycol dipalmitate, hexamethylenediol acylated with myristic acid, and oleates of various glycerols.

When a magnetic recording disk is employed at a high relative humidity, the fatty acid ester contained therein undergoes hydrolysis. Such hydrolysis of the fatty acid eaters can be reduced by selecting the chemical structures of the esters from the viewpoint that the fatty acid and alcohol are of straight chain type or branched chain type or cis-type or trans-type.

The lubricant can be incorporated into the non-magnetic layer in an amount of 0.2 to 20 weight parts per 100 weight parts of the whole non-magnetic inorganic powders in the non-magnetic layer.

The magnetic layer comprises a ferromagnetic powder and a lubricant dispersed in a binder.

Examples of the ferromagnetic powders include γ-FeO₂O₃, Fe₂O₄, FeOₓ (x=1.33-1.5), CrO₂, Co-containing γ-Fe₂O₃, Co-containing FeOₓ (x=1.33-1.5), ferromagnetic metal powders and hexagonal ferrite plate powders. In the invention, ferromagnetic metal powders and hexagonal ferrite plate powders are preferably employed.

The magnetic metal powder preferably has a specific surface area (BET) in the range of 30 to 70 m²/g, and a crystallite size of 50 to 300 Å (determined by X-ray diffraction). If the specific surface area is too small, the desired high recording density cannot be attained. If the specific surface area is too large, satisfactory dispersion cannot be performed, and no smooth surface is produced on the magnetic layer. This also means that high recording density is not attained.

The ferromagnetic metal powder employed in the invention should contain Fe. For instance, they should be powders of iron *per se* or iron alloys such as Fe, Fe-Co, Fe-Ni, and Fe-Ni-Co. These ferromagnetic metal alloy powders preferably have saturation magnetization of not less than 110 emu/g, more preferably not less than 120 emu/g for enabling the desired high density recording. The coercive force preferably is not less than 800 Oe (Oersted), more preferably not less than 900 Oe. The longitudinal length of the powder (that is, a mean particle size) determined by electromicroscope of transmission type is preferably not more than 0.5 µm, preferably 0.1 to 0.35 µm, and the ratio of length in the longitudinal direction/length in the direction vertical to the longitudinal direction (i.e., shorter direction) preferably is in the range of 5 to 20, more preferably 5 to 15.

The ferromagnetic metal powder may contain Al and/or non-metals such as B, C, Si and P for improving its performance. The surface of the ferromagnetic metal powder generally has an oxidized layer for chemically stabilizing the electromagnetic property of the powder.

The hexagonal plate ferrite powder preferably has a specific surface area (BET) in the range of 25 to 65 m²/g. The plate ratio (aspect ratio: diameter/thickness of the plate) preferably is in the range of 2 to 15, and the length of the place preferably is in the range of 0.02 to 1.0 µm. The hexagonal plate ferrite powder (i.e., plate-like powder) should have such sizes for enabling the desired high recording density, for the same reasons as described for the ferromagnetic metal powder.

The hexagonal plate ferrite powder employable in the invention has a shape of plate and is of ferromagnetic body having an axis of easy magnetization which is observed in the direction vertical to the plane of the ferrite plate. Examples of the hexagonal plate ferrite powders include barium ferrite, strontium ferrite, lead ferrite, calcium ferrite and their derivatives containing cobalt. A cobalt-containing barium ferrite and a cobalt-containing strontium ferrite are particularly preferred. The hexagonal plate ferrite powder employable in the invention, if desired, may contain other atoms such as In, Zn, Ge, Nb, V to improve its properties.

The hexagonal plate ferrite powder preferably has a saturation magnetization of not less than 50 emu/g, more preferably not less than 53 emu/g, and a coercive force of not less than 500 Oe, preferably 600 Oe, for the desired high density recording.

The above-described ferromagnetic powders preferably contain 0.01 to 2 weight % of water. The water content can be adjusted in consideration of the properties of the binder resin to be employed in combination. The pH of the ferromagnetic powder is also adjusted to an appropriate level in consideration of the property of the binder resin to be employed in combination. Generally, the appropriate range is from 4 to 12, preferably from 5 to 10. As described above, the ferromagnetic powder can be treated with Al, Si, P and/or their aides on its surface, if desired. The amounts of these element for the surface treatment are generally in the range of 0.1 to 10 weight %. Such surface treatment serves to reduce adsorption of the lubricant by the surface of the ferromagnetic powder to a level of 100 mg/m² or less. Sometimes, the ferromagnetic powder may contain soluble inorganic ions such as ions of Na, Ca, Fe, Ni and Sr. However, such impurity does not adversely affect the properties of the ferromagnetic powder, so long as the content is 5,000 ppm or less.

The lubricant for the magnetic layer can be the same as the conventional one which is described for the material of the non-magnetic layer. The amount of the lubricant which can be incorporated into the magnetic layer generally is in the range of 0.2 to 20 weight parts based on 100 weight parts of the ferromagnetic powder in the magnetic layer.

The magnetic layer of the magnetic recording disk of the invention can contain carbon black (conventionally employed electroconductive material) and abrasive.

The carbon black can be the same as that described for the material of the non-magnetic layer. However, the carbon black to be incorporated into the magnetic layer preferably has a mean particle size in the range of 5 to 350 mµ, more preferably 10 to 300 mµ. The carbon black can be a mixture of two or more kinds having different mean particle sizes. The amount of carbon black which can be incorporated into the magnetic layer generally is in the range of 1 to 30 weight parts, preferably 1 to 15 weight parts, based on 100 weight parts of the ferromagnetic powder in the magnetic layer.

Examples of the abrasives include melted alumina, silicon carbide, chromium oxide (Cr₂O₃), corundum, artificial corundum, diamond, artificial diamond, garnet, and emery (main ingredients: corundum and magnetite). These abrasives have a Mohs hardness of not lower than 5, preferably not lower than 6. The abrasive preferably has a mean particle size in the range of 0.05 to 1 µm, more preferably 0.2 to 0.8 µm. The abrasive is preferably incorporated into the magnetic layer in an amount of 3 to 25 weight parts, specifically 3 to 20 weight parts, per 100 weight parts of the ferromagnetic powder.

The binders employable for the formation of the magnetic layer and the non-magnetic layer of the magnetic recording disk according to the invention are described below.

The binders employable in the invention may be a thermoplastic resin, a thermosetting resin, a reactive-type resin, and their mixtures.

The above-mentioned thermoplastic resin preferably has a glass transition temperature in the range of -100 to 150°C, a number average molecular weight in the range of 1,000 to 200,000, preferably 10,000 to 100,000, and a polymerization degree in the range of approximately 50 to 1,000.

Examples of such thermoplastic resins include homopolymers and copolymers having as their constitutional units, vinyl chloride, vinyl acetate, vinyl alcohol, maleic acid, acrylic acid, acrylic esters, vinylidene chloride, acrylonitrile, methacrylic acid, methacrylic esters, styrene, butadiene, ethylene, vinyl butyral, vinyl acetal, and/or vinyl ethers; polyurethane resins, and various elastic resins.

Examples of the thermosetting resins and the reactive-type resins include phenol resin, epoxy resin, curable polyurethane resin, urea resin, melamine resin, alkyd resin, acrylic reactive resin, formaldehyde resin, silicone resin, epoxy-polyamide resin, mixture of polyester resin and isocyanate prepolymer, mixture of polyester polyol and polyisocyanate, and mixture of polyurethane and polyisocyanate.

These resins are described in detail in "Plastic Handbook" of new version, written in Japanese, published in 1985 by Asakura Shoten).

Also employable is an electron beam-curable resin. Examples of such resin and their preparations are described in detail in Japanese Patent Provisional Publication No. 62-256219.

The above-mentioned resins can be employed singly or in combination.

In the invention, combinations of polyurethane and at least one resin selected from the group consisting of vinyl chloride resin, vinyl chloride-vinyl acetate copolymer, vinyl chloride-vinyl acetate- vinyl alcohol copolymer, vinyl chloride-vinyl acetate-maleic anhydride copolymer, and nitrocellulose, if desired further in combination with polyisocyanate, are preferred.

The above-mentioned polyurethane resin can be known polyester polyurethane, polyether polyurethane, polyether polyester polyurethane, polycarbonate polyurethane, polyester polycarbonate polyurethane and polycaprolactone polyurethane.

The above-mentioned binder polymers can contain at least one polar group selected from the group consisting of -COOM, -SO₃M, -SO₃M, -P=O(OM)₂, -O-P=O(OM)₂ (M is hydrogen atom or an alkali metal), -OH, -NR₂-, -N⁺R₃ (R is a hydrocarbon group), epoxy group, -SH, and -CN. These polar groups can be incorporated into the binder polymer by copolymerization or addition reaction.

The polar group is preferably incorporated into the binder polymer in an aunt of 10⁻¹ to 10⁻⁸ mole/g, more preferably 10⁻² to 10⁻⁶ mole/g.

The polyurethane preferably has a glass transition temperature in the range of -50 to 100°C, an elongation at rupture in the range of 100 to 2,000%, a breaking stress in the range of 0.05 to 10 kg/cm², a breakdown point in the range of 0.05 to 10 kg/cm².

Concrete examples of the binder polymer employable in the invention include VAGH, VYHH, VMCH, VAGF, VAGD, VROH, VYES, VYNC, VMCC, XYHL, XYSG, PKHH, PKHJ, PKHC and PKFE (all available from Union Carbide Corp.), MPR-TA, MPR-TA5, MPR-TAL, MPR-TSN, MPR-TMF, MPR-TS and MPR-TM (all available from Nisshin Chemical Industry Co., Ltd.), 1000W, DX80, DX81, DX82 and DX 83 (all available from Denki Kagaku Kogyo Co., Ltd.), MR110, MR100 and 400X110A (all available from Nihon Geon Co., Ltd.), Nipporan N2301, N2302 and N2304 (all available from Nippon Polyurethane Industries Co., Ltd.), Pandex T-5105, T-R3080, T-5201, Bernock D-400, D-210-80, Crysbon 6109 and 7209 (all available from Dai-Nippon Ink and Chemical Industries Co., Ltd.), Byron UR8200, UR8300, UR8600, UR5500, RV530 and RV280 (all available from Toyobo Co., Ltd.), Daipheramine 4020, 5020, 5100, 5300, 9020, 9022, and 7020 (all available from Dainippon Seika Co., Ltd.), MX5004 (available from Mitsubishi Chemical Industries Co., Ltd.), Sunplene SP-150 (available from Sanyou Chemical Industry Co., Ltd.), and Saran F310 and F210 (both available from Asahi Kasei Co., Ltd.).

Examples of the polyisocyanates include isocynates such as tolylene diisocyanate, 4,4-diphenylmethane diisocyanate, hexamethylene diisocyanate, xylylne diisocyanate, naphthylene-1,5-diisocyanate, o-toluidine diisocyanate, isophorone diisocyanate, and triphenylmethane triisocyanate; reaction products of these isocyanates and polyalcohols; and polyisocyanates produced by condensations of isocyanates.

Concrete examples of these isocyanates include Colonate L, Colonate HL, Colonate 2030, Colonate 2031, Millionate MR, Millionate MTL (all available from Nippon Polyurethane Industries Co., Ltd.), Takenate D-102, Takenate D-110N, Takenate D-200, and Takenate D-202 (all available from Takeda Pharmaceutical Industry Co., Ltd.), and Desmodule L, Desmodule IL, Desmodule N and Desmodule HL (all available from Somitomo Bayer Co., Ltd.). These isocyanates can be employed singly or in combination whereby utilizing different easiness of curable behaviors).

In the invention, the binder polymer can be employed in the range of 5 to 50 weight parts, preferably 10 to 30 weight parts , based on 100 weight parts of the ferromagnetic powder in the magnetic layer or the non-magnetic powder in the non-magnetic layer.

If the binder polymer is to be produced by the combination of vinyl chloride resin, polyurethane resin, and polyisocyanate, they are incorporated in the following amounts: 5 to 70 weight % for vinyl chloride resin, 2 to 50 weight % for polyurethane resin, and 2 to 50 weight % for polyisocyanate.

The magnetic layer and the non-magnetic layer of the magnetic recording disk of the invention can further contain a dispersant, a plasticizer, an electroconductive powder (anti-static agent) other than carbon black, and an anti-mildew agent, in addition to the aforementioned materials.

Examples of the dispersants (dye-wetting agents) include fatty acids having 12 to 22 carbon atoms (R¹COOH, wherein R¹ represents alkyl or alkenyl of 11 to 21 carbon atoms) such as caprylic acid, capric acid, lauric acid, myristic acid, palmitic acid, stearic acid, behenic acid, oleic acid, eraidic acid, linoleic acid, linolenic acid, and stearol acid; salts of alkali metals (e.g., Li, Na, and K) and alkaline earth metals (e.g., Mg, Ca, and Ba) and these fatty acids, that is, metal soaps; fatty acids (those as above) having fluorine atom; amides of fatty acids (those as above); polyalkylene oxide alkylphosphonate, lecithin; and trialkylpolyolefine oxy-quaternary-ammonium salt (alkyl has 1 to 5 carbon atoms; olefin can be ethylene or propylene). The dispersant can be incorporated into the layer in the range of 0.5 to 20 weight parts per 100 weight parts of the binder polymer.

The non-magnetic support employable for the preparation of the magnetic recording disk according the invention is now described.

There are no specific limitations with respect to the support material, so long as it is flexible. Most of materials having been employed for the supports of the conventional magnetic recording disks. Examples of the support materials include films of various polymers such as polyethylene terephthalate, polyethylene, polypropylene, polycarbooate, polyethylene naphthalate, polyamide, polyamideimide, polyimide, polysulfone, and polyethersulfone; and metallic foils such as aluminum foil and stainless steel foil. Preferred is a film of polyethylene terephthalate.

The non-magnetic support generally has a thickness in the range of 1 to 100 µm, preferably 4 to 85 µm.

The non-magnetic support to be employed in the invention may be subjected, in advance, to corona discharging, plasma discharging, adhesion-improving processing, thermal treatment or dust-removing treatment.

The non-magnetic support to be employed in the invention preferably has a center line average surface roughness (Ra: cut-off at 0.25 mm) of 0.03 µm or less, more preferably 0.02 µm or less, most preferably 0.01 µm or less. It is also preferred that the non-magnetic support has no large protrusions such as 1 µm or larger. The surface roughness and other surface conditions of the non-magnetic support can be controlled, if necessary, by varying the size and amount of the filler incorporated into the support. Examples of the fillers include oxides and carbonates of Ca, Si and Ti, and organic fine powders such as powdery acrylic resin.

The representative processes advantageously employed for preparing the magnetic recording disk of the invention are described below in detail.

The process for the preparation of the magnetic recording disk of the invention generally comprises a coating stage, a slitting stage, a punching stage, and a stage for encasing the punched disk into a cartridge. The coating stage preferably comprises the aforementioned step for forming the non-magnetic layer and magnetic layer by the wet-on-wet coating process, a step for random orientation of the magnetic powder in the magnetic layer while the coated non-magnetic and magnetic layers are still wet, a step for drying the non-magnetic layer and the magnetic layer, and a calendaring step for smoothing the surface of the magnetic layer. These steps are further described below in more detail.

Each of the coating solutions (i.e., coating liquids or mixtures) for forming the non-magnetic layer and the magnetic layer can be prepared by kneading and dispersing the appropriate ingredients and the binder in an organic solvent. The coating solution can be produced by a process comprising a kneading step and a dispersing step. A step for mixing the appropriate ingredients can be placed before, after and between these steps. Each step can comprise two or more separate steps. Each of these ingredients can be introduced in or before an optionally chosen step. One ingredient can be divided and incorporated into the solution separately. For instance, the whole amount of the binder such as polyurethane can be divided into plural portions, and each portion can be incorporated into the mixture solution during or after optionally chosen steps such as during the kneading step, during the dispersing step, and after the dispersing step, whereby adjusting the viscosity of the coating solution at each step.

Examples of the solvents employed for the preparation of the coating solutions include ketones such as acetone, methyl ethyl ketone, methyl isobutyl ketone, diisobutyl ketone, cyclohexanone, and isophorone; alcohols such as methanol, ethanol, propanol, butanol, isobutyl alcohol, isopropyl alcohol, and methylcyclohexanol; esters such as methyl acetate, ethyl acetate, butyl acetate, isobutyl acetate, isopropyl acetate, ethyl lactate and glycol acetate; ethers such as diethyl ether and tetrahydrofuran; glycol ethers such as glycol dimethyl ether, glycol monoethyl ether and dioxane; aromatic hydrocarbons such as benzene, toluene, xylene, cresol and chlorobenzene; chlorinated hydrocarbons such as methylene chloride, ethylene chloride, carbon tetrachloride, chloroform, ethylene chlorohydrin and dichlorobenzene, N,N-dimethylformamide; and hexane. Any of these organic solvents are not necessary of 100% pure, and can contain a small amount of impurities such as isomers, unreacted compounds, by-products, decomposed compounds, and oxidized compounds. The contents of such impurities are preferred to be 30% or less, are preferably 10% or less.

The solvent and its amount can be varied between the coating solution for the formation of the magnetic layer and the coating solution for the formation of the non-magnetic layer. For instance, a highly volatile solvent can be employed for the coating solution for the magnetic layer to improve its surface smoothness. A solvent having a high surface tension such as cyclohexanone or dioxane can be employed for increasing stability of the coated magnetic layer. A solvent having a high solubilizing parameter can be used for increasing the packing density of the non-magnetic layer.

Before the forming the non-magnetic layer, a subbing layer (i.e., undercoating) can be placed on the support. The thickness of the subbing layer preferably is in the range of 0.01 to 2 µm, are preferably 0.05 to 0.5 µm. If the combination of the non-magnetic layer and magnetic layer is provided only on one surface of the non-magnetic support, other surface can be provided with a back-coat layer. The thickness of the back-coat layer preferably is in the range of 0.1 to 2 µm, are preferably 0.3 to 1.0 µm. The subbing layer and the back-coat layer can be formed on the support in any of the manners known for the preparations of magnetic recording tapes and magnetic recording disks.

The non-magnetic layer and the magnetic layer are then formed by any of the aforementioned wet-on-wet coating processes.

Subsequently, the magnetic layer is subjected to random orientation, while it is still wet, that is, under wet condition. The random orientation can be performed by the use of a permanent magneto (Japanese Patent Publication H3-41895), or by application of AC magnetic field (Japanese Patent Provisional Publications No. 62-92132, No. 63-148417, No. H1-300427, and No. H1-300428). The latter procedure is preferably employed in the invention. In more detail, the composite of the wet non-magnetic layer and the wet magnetic layer is passed through a pair of two alternating current magnetic fields. The frequency and the magnetic field strength of each A.C. magnetic field is generally 50 Hz, 50 to 500 Oe, and 120 Hz, 50 to 500 Oe. Preferably, the orientation ratio should be adjusted to 0.85 or more by the random orientation processing of the ferromagnetic powder. Under such conditions, a reproduction output can be made to the same level at any radial directions of the disk.

The non-magnetic layer and magnetic layer on the support having been subjected to the random orientation procedure are dried and then subjected to the calendaring processing.

The calendaring is performed by the composite of the support, the non-magnetic layer and the magnetic layer having been dried through a set of heated rollers. The rollers are preferably plastic rollers made of heat resistant plastic material such as epoxy resin, polyimide resin, polyamide resin, or polyamidoimide resin. A metallic rollers can be used. Preferred calendaring conditions are as follows: heating temperature in the range of 70 to 120°C, preferably 80 to 110°C, and a linear pressure in the range of 200 to 450 kg/cm, preferably 250 to 400 kg/cm. The calendaring machine is preferably provided with 5 to 11 sets of rollers which can be operated at a rate of 50 to 500 m/min.

The calendared body is then slitted and punched to give a magnetic recording disk. The produced disk is then encased in an appropriate cartridge.

The magnetic recording disk of the invention preferably has a surface resistivity on its magnetic layer in the range of 1x10⁵ to 5x10⁹ ohm/sq. The breaking strength of the magnetic layer preferably is in the range of 1 to 30 kg/cm². The heat shrinkage at 100°C preferably is 1% or less, more preferably 0.5% or less, most preferably 0.1% or less. The amount of the solvent remaining in the magnetic layer preferably is not more than 100 mg/m², more preferably not more than 10 mg/m². It is preferred that the amount of the solvent remaining in the magnetic layer is less than the amount of the solvent remaining in the non-magnetic layer.

The magnetic recording layer of the invention can be adjusted in its physical properties with respect to both the magnetic layer and the non-magnetic layer, if desired. For instance, the modulus of elasticity of the magnetic layer can be increased to improve the running endurance. If the modulus of elasticity of the non-magnetic layer is adjusted to become less than the modulus of elasticity of the magnetic layer, the contact to a magnetic head of the magnetic recording disk of the invention can be improved.

The magnetic recording and reproducing method of the invention can be performed using the above-mentioned magnetic recording disk of the invention. When the magnetic recording disk of the invention is employed, a digital signal having a minimum recording wavelength (i.e., a shortest recording wavelength recorded on the inner periphery of the magnetic recording disk in the case of recording at a constant rate) of 1. 5 µm or less can be recorded and reproduced. Further, since the thickness of the magnetic layer of the magnetic recording disk of the invention is so thin as to be 0.5 µm or less, the over-writing property which should be noted in the digital recording is improved.

The method of recording and reproducing digital signal on the magnetic recording disk of the invention can be made under the condition that the disk is kept to be in contact with a magnetic head or not. In the latter case, the magnetic recording disk is kept apart from the magnetic head.

The recording and reproducing under the condition that the recording disk is kept in contact with a magnetic head can be performed according to the cymbal system which is adopted in the commercially available floppy disk drives for floppy disks of 3.5 inches, 5 inches, 8.5 inches, etc. In this system, the magnetic head is placed on the disk under a certain pressure or the disk is sandwiched between magnetic heads. The rotation rate of the disk generally is in the range of 200 to 2,000 r.p.m. If the rotation rate is too high, an air is introduced between the head and the disk, which disturbs reliable contact of the disk to the head.

The recording and reproducing under the condition that the recording disk is kept not in contact with the magnetic head can be performed in such commercially available disk drives using such head mechanism as of Winchester system or according to Verneuil Effect. The disk is preferably rotated at a high speed such as at a rotation rate of 2,000 to 15,000 r.p.m., so as to ensure stable non-contact conditions and increase the data transfer rate.

The invention is further described by the following examples, in which "part(s)" means "part(s) by weight", unless otherwise specified.

### Example 1

### [Preparation of Coating solutions for forming Non-magnetic layer and Magnetic layer]

### (1) Non-magnetic layer

| | part(s) |
|---|---|
| Titanium dioxide (TiO₂, non-magnetic inorganic powder, TTO-55B, tradename of product available from Ishihara Sangyo Co., Ltd., mean particle size: 0.04 µm, BET specific surface area: 40 m²/g, pH 7.0, Mohs hardness: 6.0) | 75 |
| Carbon black (Ketchen Black EC, tradename, product available from Lion-Akzo Co., Ltd., mean particle size: 30 mµ, DBP oil absorption: 350 mL/100 g, pH 9.5, BET specific surface area: 950 m²/g, volatile amount: 1.0%) | 10 |
| α-Alumina (Al₂O₃, non-magnetic inorganic powder, AKP-15, tradename, product available from Sumitomo Chemical Industries Co., Ltd., mean particle size: 0.65 µm, Mohs hardness: 9.0) | 15 |
| Vinyl chloride copolymer containing polar group (-SO₃Na) (MR-110, tradename, product available from Nihon Geon Co., Ltd.) | 12 |
| Polyester polyurethane resin containing polar group (-SO₃Na) (UR-8600, tradename, product available from Toyobo Co., Ltd.) | 5 |
| Isohexyldecyl stearate | 4 |
| n-Butyl stearate | 4 |
| Butoxyethyl stearate | 4 |
| Oleic acid | 1 |
| Stearic acid | 1 |
| Methyl ethyl ketone | 300 |

### (2) Magnetic layer

| | part(s) |
|---|---|
| Ferromagnetic metal powder (Fe:Ni=96:4, coercive force (Hc): 1600 Oe, BET specific surface area: 45 m²/g, crystallite size: 220 Å, saturation magnetization (σs): 135 emu/g, particle size (mean longitudinal size): 0.20 µm, aspect ratio: 9) | 100 |
| Vinyl chloride copolymer containing polar group (-SO₃Na) (MR-110, tradename, product available from Nihon Geon Co., Ltd.) | 12 |
| Polyester polyurethane resin containing polar group (-SO₃Na) (UR-8600, tradename, product available from Toyobo Co., Ltd.) | 5 |
| α-Alumina (particle size: 0.65 µm) | 2 |
| Chromium oxide (particle size: 0.35 µm) | 15 |
| Carbon black (particle size: 0.03 µm) | 2 |
| Carbon black (particle size: 0.3 µm) | 9 |
| Isohexyldecyl stearate | 4 |
| n-Butyl stearate | 4 |
| Butoxyethyl stearate | 4 |
| Oleic acid | 1 |
| Stearic acid | 1 |
| Methyl ethyl ketone | 300 |

### (3) Preparation of the coating solutions

The ingredients of the non-magnetic layer and the magnetic layer were separately kneaded in a continuous kneader and dispersed in a sand mill. Polyisocyanate (Colonate, tradename, product available from Nihon Polyurethane Industry Co., Ltd.) was added to the resulting dispersion (10 parts for the non-magnetic layer coating solution, and 10 parts for the magnetic layer coating solution). Subsequently, 40 parts of butyl acetate were added to both solutions. Both solutions were filtered over a filter having a mean pore size of 1 µm to give a coating solution for non-magnetic layer and a coating solution for magnetic layer.

### [Preparation of Magnetic Recording Disk]

The resulting coating solutions for non-magnetic layer and magnetic layer were coated on both surface of a polyethylene phthalate support (thickness: 62 µm, center line surface roughness: 0.01 µm) by the simultaneous double coating method under the conditions that the thickness after dryness of the non-magnetic layer should become 1.5 µm, and the thickness after dryness of the magnetic layer on the non-magnetic layer should become 0.45 µm. Then, while both coated layers were still wet, they were passed through a pair of A.C. magnetic field generators (frequency 50 Hz, magnetic field strength 250; and frequency 50 Hz, magnetic field strength 120) for attaining random orientation.

They were then dried and calendared in a calendar machine having seven sets of rollers (temperature 90°C, linear pressure 300 kg/cm). The calendared product was punched to give a disk having a diameter of 3.5 inches. The disk was polished on its surfaces and encased into a cartridge of 3.5 inches having inside liners, and the cartridge was equipped with necessary mechanical parts.

### Example 2

The procedures of Example 1 were repeated except that the coating solution for magnetic layer was coated to give a dry layer of 0.11 µm thick, to give a magnetic recording disk, which was then encased in the cartridge.

### Example 3

The procedures of Example 1 were repeated except that α-alumina (Al₂O₃) for the coating solution for non-magnetic layer was replaced with the following α-alumina, to give a magnetic recording disk, which was then encased in the cartridge.
- α-Alumina (Al₂O₃):: HIT-55, tradename, product available from Sumitomo Chemical Industries Co., Ltd., mean particle size; 0.23 µm, Mohs hardness: 9.0)

### Example 4

The procedures of Example 1 were repeated except that α-alumina (Al₂O₃) for the coating solution for non-magnetic layer was replaced with the following α-alumina, to give a magnetic recording disk, which was then encased in the cartridge.
- α-Alumina (Al₂O₃):: AKP-10, tradename, product available from Sumitomo Chemical Industries Co., Ltd., mean particle size: 1.05 µm, Mohs hardness: 9.0)

### Example 5

The procedures of Example 1 were repeated except that the amounts of the non-magnetic inorganic powders for the coating solution for nonmagnetic layer were changed to the following amounts, to give a magnetic recording disk, which was then encased in the cartridge.

| | |
|---|---|
| Titanium dioxide (TiO₂): | 85 parts |
| α-Alumina (Al₂O₃): | 5 parts |

### Example 6

The procedures of Example 1 were repeated except that the amounts of the non-magnetic inorganic powders for the coating solution for nonmagnetic layer were changed to the following amounts, to give a magnetic recording disk, which was then encased in the cartridge.

| | |
|---|---|
| Titanium dioxide (TiO₂): | 60 parts |
| α-Alumina (Al₂O₃): | 30 parts |

### Example 7

The procedures of Example 1 were repeated except that the amount of the carbon black and the amounts of the non-magnetic inorganic powders for the coating solution for nonmagnetic layer were changed to the following amounts, to give a magnetic recording disk, which was then encased in the cartridge.

| | |
|---|---|
| Carbon black: | 5 parts |
| Titanium dioxide (TiO₂): | 80 parts |
| α-Alumina (Al₂O₃): | 15 parts |

### Example 8

The procedures of Example 1 were repeated except that the amount of the carbon black and the amounts of the non-magnetic inorganic powders for the coating solution for nonmagnetic layer were changed to the following amounts, to give a magnetic recording disk, which was then encased in the cartridge.

| | |
|---|---|
| Carbon black: | 15 parts |
| Titanium dioxide (TiO₂): | 70 parts |
| α-Alumina (Al₂O₃): | 15 parts |

### Example 9

The procedures of Example 1 were repeated except that the carbon black for the coating solution for non-magnetic layer was replaced with the following carbon black, to give a magnetic recording disk, which was then encased in the cartridge.
- Carbon black: (Ketchen Black EC600JD, tradename, product available from Lion-Akso Co., Ltd., mean particle size 25 mµ, DBP oil absorption 480 mL/100 g, pH 9.5, BET specific surface area: 1300 m²/g, volatile amount: 0.7%)

### Example 10

The procedures of Example 1 were repeated except that the coating solution for nonmagnetic layer was coated to prepare a dry nonmagnetic layer of 3.0 µm, to give a magnetic recording disk, which was then encased in the cartridge.

### Example 11

The procedures of Example 1 were repeated except that α-alumina (Al₂O₃) for the coating solution for non-magnetic layer was replaced with the following α-iron oxide (α-Fe₂O₃), to give a magnetic recording disk, which was then encased in the cartridge.
- α-Iron oxide (Al₂O₃):: TF-180, tradename, product available from Toda Industry Co., Ltd., mean particle size 0.55 µm, Mohs hardness: 6.0)

### Example 12

The procedures of Example 1 were repeated except that α-alumina (Al₂O₃) for the coating solution for non-magnetic layer was replaced with the following titanium dioxide (TiO₂), to give a magnetic recording disk, which was then encased in the cartridge.
- Titanium dioxide (TiO₂):: TY-50, tradename, product available from Ishihara Sangyo Co., Ltd., mean particle size 0.34 µm, BET specific surface area: 5.9 m²/g, pH 5.9, Mohs hardness: 6.0)

### Comparison Example 1

The procedures of Example 1 were repeated except that the coating solution for magnetic layer was coated to give a dry layer of 0.65 µm thick, to give a magnetic recording disk, which was then encased in the cartridge.

### Comparison Example 2

The procedures of Example 1 were repeated except that α-alumina (Al₂O₃) for the coating solution for non-magnetic layer was replaced with the following α-alumina, to give a magnetic recording disk, which was then encased in the cartridge.
- α-Alumina (Al₂O₃):: HIT-100, tradename, product available from Sumitomo Chemical Industries Co., Ltd., mean particle size: 0.6 µm, Mohs hardness: 9.0)

### Comparison Example 3

The procedures of Example 1 were repeated except that α-alumina (Al₂O₃) for the coating solution for non-magnetic layer was replaced with the following α-alumina, to give a magnetic recording disk, which was then encased in the cartridge.
- α-Alumina (Al₂O₃):: mean particle size: 2.5 µm Mohs hardness: 9.0

### Comparison Example 4

The procedures of Example 1 were repeated except that the amounts of the non-magnetic inorganic powders for the coating solution for nonmagnetic layer were changed to the following amounts, to give a magnetic recording disk, which was then encased in the cartridge.

| | |
|---|---|
| Titanium dioxide (TiO₂): | 90 parts |
| α-Alumina (Al₂O₃): | 0 part |

### Comparison Example 5

The procedures of Example 1 were repeated except that the amounts of the non-magnetic inorganic powders for the coating solution for nonmagnetic layer were changed to the following amounts, to give a magnetic recording disk, which was then encased in the cartridge.

| | |
|---|---|
| Titanium dioxide (TiO₂): | 45 parts |
| α-Alumina (Al₂O₃): | 45 parts |

### Comparison Example 6

The procedures of Example 1 were repeated except that the amounts of the non-magnetic inorganic powders for the coating solution for nonmagnetic layer were changed to the following amounts, to give a magnetic recording disk, which was then encased in the cartridge.

| | |
|---|---|
| Titanium dioxide (TiO₂): | 85 parts |
| α-Alumina (Al₂O₃): | 15 parts |

### Comparison Example 7

The procedures of Example 1 were repeated except for that the following changes were made.

The coating solution for non-magnetic layer was first coated on the surface of the polyethylene support to give a dry non-magnetic layer of 1.5 µm thick. The coated non-magnetic solution layer was dried and calendared under the same conditions as those described in Example 1. Thereafter, the coating solution for magnetic layer was coated on the dry non-magnetic layer to give a dry magnetic layer of 0.45 µm thick. The resulting two layer structure was then subjected to the random orientation, drying and calendaring under the same conditions as those described in Example 1, to give a magnetic recording disk, which was then encased in the cartridge.

### Comparison Example 8

The procedures of Example 1 were repeated except that the lubricants (isohexadecyl stearate, n-butyl stearate, butoxyethyl stearate, oleic acid and stearic acid) were not incorporated into the coating solution for magnetic layer, to give a magnetic recording disk, which was then encased in the cartridge.

### Comparison Example 9

The procedures of Example 1 were repeated except that the lubricants (isohexadecyl stearate, n-butyl stearate, butoxyethyl stearate, oleic acid and stearic acid) were not incorporated into the coating solution for non-magnetic layer, to give a magnetic recording disk, which was then encased in the cartridge.

### Comparison Example 10

The procedures of Example 1 were repeated except that titanium dioxide (TiO₂) and α-alumina (Al₂O₃) for the coating solution for nonmagnetic layer was replaced with the following titanic dioxide (TiO₂) and α-alumina (Al₂O₃), to give a magnetic recording disk, which was then encased in the cartridge.
- Titanium dioxide (TiO₂):: mean particle size: 0.34 µm, BET specific surface area: 40 m²/g, pH 7.0, Mohs hardness: 6.0)
- α-Alumina (Al₂O₃):: AKP-30, tradename, product available from Sumitomo Chemical Industries Co., Ltd., mean particle size: 0.40 µm, Mohs hardness: 9.0)

### [Evaluation of Magnetic Recording Disk]

Various characteristics of the obtained magnetic recording disk were evaluated in the following manner.

### (1) Surface Resistivity (Ω/sq)

The surface resistivity was measured in accordance with the method defined in JIS-X-6101.9.4 using a digital super insulating resistance meter (TR-8611A, tradename, product of Takeda Riken Co., Ltd.).

### (2) Measurement of Reproduction Output

The signal of recording frequency of 625 kHz was recorded on the magnetic recording disk by means of a disk tester (SK-606B, tradename, product of Tokyo Engineering Co., Ltd.) which had a metal in-gap head having a gap length 0.45 µm, at the position of 24.6 mm (radius). The reproduction output at the head multiplier was measured by means of a cathode-ray oscilloscope (7633 type, available from Tectronics Co., Ltd.). The reproduction output was obtained in terms of a relative value (to 100 for the reproduction output of the magnetic recording disk of Example 1).

### (3) Overwriting Property

The signal of 312.5 kHz was recorded on the magnetic recording disk after A.C. erasure, using the above testing device at the position of 39.5 mm (radius), and the output 01 (dB) at the 312.5 KHz portion was measured by means of a spectrum analyzer (TR4171, tradename, product of Advantest Co., Ltd.). Immediately after, the signal of 1 MHz was overwritten, and the output 02 (dB) at the 312.5 KHz portion was measured. The overwriting property is expressed in terms of a value of 02 - 01 (dB). The magnetic recording disk preferably has an overwriting property value of -30 dB or less.

### (4) Running Endurance (or Durability)

A signal was recorded on the whole 240 tracks at the recording frequency of 625 kHz using a floppy disk drive (FD1331, tradename, product of Nihon Electric Co., Ltd.). Thereafter, a thermocycle test at the position of 37.25 mm from the center in the radial direction in which one cycle comprised the flow described below.

Every 24 hours, the dropout on every track was counted, and failure was marked when the remaining output reached 45% or less. The running endurance was evaluated at the time when the running was continued to reach pass times of 12,000,000 (555 hours) under the thermocycle conditions.

### Thermocycle flow:

1): 25°C, 50%RH, 1 hr. → heating, 2 hr. →
2): 60°C, 20%RH, 7 hrs. → cooling, 2 hrs. →
3): 25°C, 50%RH, 1 hr. → cooling, 2 hrs. →
4): 5°C, 10%RH, 7 hrs. → heating, 2 hrs. → 1)

### (5) Low Temperature Storage Test

The magnetic recording disk was kept at -5°C for 72 hours, and then its appearance was observed visually and further using a microscope.

The test results are set forth in Table 1.

**Table 1**

| Example | Surface Resist. (Ω/sq) | Repro. Output (%) | Overwriting (dB) | Running Endurance (x10⁴ pass) | Low Temp. Storage (change) |
|---|---|---|---|---|---|
| Ex. 1 | 5x10⁶ | 100 | -33 | 1200 OK | None |
| Ex. 2 | 5x10⁶ | 96 | -42 | 1200 OK | None |
| Ex. 3 | 2x10⁶ | 105 | -34 | 1200 OK | None |
| Ex. 4 | 6x10⁶ | 95 | -32 | 1200 OK | None |
| Ex. 5 | 8x10⁶ | 104 | -34 | 1200 OK | None |
| Ex. 6 | 8x10⁶ | 97 | -33 | 1200 OK | None |
| Ex. 7 | 5x10⁸ | 95 | -33 | 1200 OK | None |
| Ex. 8 | 6x10⁶ | 95 | -32 | 1200 OK | None |
| Ex. 9 | 1x10⁶ | 100 | -33 | 1200 OK | None |
| Ex.10 | 5x10⁵ | 96 | -32 | 1200 OK | None |
| Ex.11 | 6x10⁶ | 98 | -33 | 1200 OK | None |
| Ex.12 | 7x10⁶ | 99 | -33 | 1200 OK | None |
| Com.1 | 3x10⁶ | 104 | -23 | 1200 OK | None |
| Com.2 | 2x10⁶ | 107 | -34 | 100 Wear | None |
| Com.3 | 6x10⁶ | 92 | -31 | 50 Stick | Bloom |
| Com.4 | 2x10⁶ | 106 | -33 | 150 Wear | None |
| Com.5 | 9x10⁶ | 91 | -32 | 50 Stick | Bloom |
| Com.6 | >1x10¹³ | 97 | -33 | 100 D.O. | None |
| Com.7 | 5x10⁶ | 93 | -31 | 900 D.O. | None |
| Com.8 | 5x10⁶ | 103 | -33 | 50 Wear | None |
| Com.9 | 5x10⁶ | 99 | -33 | 150 Wear | None |
| Com.10 | 6x10⁶ | 92 | -31 | 50 Stick | Bloom |
| Com.11 | 5x10⁶ | 91 | -29 | 50 Stick | Bloom |
| Remarks: Wear: wear observed and stopped Stick: stuck and stopped D.O.: drop-out observed Bloom: Blooming observed | | | | | |

The results in Table 1 show that the magnetic recording disks according to the invention (Examples 1 to 12) have excellent performance in the electromagnetic conversion characteristics such as reproduction output and overwriting property, the surface resistivity, and the running endurance.

In contrast, the magnetic recording disk having a thick magnetic layer of thicker than 0.5 µm (Comparison Example 1) gives poor overwriting property. Comparison Examples 2 and 4 show that a non-magnetic layer comprising a non-magnetic inorganic powder of a relatively small size gives a magnetic layer having a smooth surface and a high reproduction output due to reduced spacing loss between the disk surface and the recording/reproducing head, but gives poor running endurance probably due to slow emigration of the lubricant toward the magnetic layer. Insufficient reproduction output and poor running endurance were observed for the magnetic recording disks of Comparison Example 3 (employing an extremely large non-inorganic powder), Comparison Example 5 (employing an excessive amount of a relatively large non-inorganic powder), and Comparison Examples 10 & 11 (employing a relatively large non-inorganic powder alone), probably due to the resulting poor surface smoothness. Also, blooming was observed when they were kept at a low temperature, due to excessive easiness of emigration of the lubricant to the magnetic layer.

If no carbon black is incorporated in the non-magnetic layer (Comparison Example 6), the surface resistivity increases, the reproduction output decreases, and drop-out occurs.

Comparison Example 7 shows that the surface smoothness becomes poor, and the reproduction output and running endurance both become poor in the case that the magnetic layer is formed on the previously dried non-magnetic layer.

If no lubricant was incorporated into the magnetic layer or the non-magnetic layer (Comparison Examples 8 and 9), wear was observed within a short time.

## Claims

1. A magnetic recording disk comprising a flexible non-magnetic support, a non-magnetic layer of 0.5 to 5 µm thick which is arranged on at least one surface of the support and comprises a non-magnetic inorganic powder, a lubricant and carbon black dispersed in a binder, and a magnetic layer of 0.02 to 0.5 µm thick which comprises a ferromagnetic powder and a lubricant dispersed in a binder and has been formed on the non-magnetic layer when the non-magnetic layer has had wet surface, wherein the non-magnetic inorganic powder comprises at least two kinds of non-magnetic inorganic powders having different mean particle sizes, one of which has a mean particle size in the range of 10 to 80% of the thickness of the non-magnetic layer and another of which has a mean particle size in the range of 0.5 to 10% of the thickness of the non-magnetic layer, the former powder and the latter powder being in a weight ratio of 3:97 to 40:60.

2. The magnetic recording disk of claim 1, wherein the mean particle size of one non-magnetic inorganic powder in the non-magnetic layer differs from the mean particle size of another non-magnetic inorganic powder by at least 5% of the thickness of the non-magnetic layer.

3. The magnetic recording disk of claim 1, wherein the non-magnetic inorganic powders both have a Mohs hardness of not less than 5.

4. The magnetic recording disk of claim 1, wherein the non-magnetic inorganic powder having a mean particle size in the range of 10 to 80% of the thickness of the non-magnetic layer has a Mohs hardness higher than a Mohs hardness of the non-magnetic inorganic powder having a mean particle size in the range of 0.5 to 10% of the thickness of the non-magnetic layer.

5. The magnetic recording disk of claim 1, wherein the non-magnetic inorganic powder having a mean particle size in the range of 10 to 80% of the thickness of the non-magnetic layer has a Mohs hardness higher than a Mohs hardness of the non-magnetic inorganic powder having a mean particle size in the range of 0.5 to 10% of the thickness of the non-magnetic layer, by not less than 2.

6. The magnetic recording disk of claim 1, wherein the non-magnetic inorganic powder having a mean particle size in the range of 10 to 80% of the thickness of the non-magnetic layer is a powder of α-alumina.

7. The magnetic recording disk of claim 1, wherein the non-magnetic inorganic powder having a mean particle size in the range of 0.5 to 10% of the thickness of the non-magnetic layer is a powder of titanium dioxide.

8. The magnetic recording disk of claim 1, wherein the carbon black has a mean particle size in the range of 10 to 35 mµ.

9. The magnetic recording disk of claim 1, wherein the carbon black is contained in the non-magnetic layer in an amount of 3 to 20 weight parts based on 100 weight parts of the whole non-magnetic inorganic powders in the non-magnetic layer.

10. The magnetic recording disk of claim 1, wherein the non-magnetic layer has a thickness in the range of 1.0 to 3.5 µm, and the magnetic layer has a thickness in the range of 0.03 to 0.45 µm.

11. The magnetic recording disk of claim 1, wherein the non-magnetic layer and the magnetic layer has been formed by simultaneous double coating.

12. The magnetic recording and reproducing method employing a magnetic recording disk comprising a flexible non-magnetic support, a non-magnetic layer of 0.5 to 5 µm thick which is arranged on at least one surface of the support and comprises a non-magnetic inorganic powder, a lubricant and carbon black dispersed in a binder, and a magnetic layer of 0.02 to 0.5 µm thick which comprises a ferromagnetic powder and a lubricant dispersed in a binder and has been formed on the non-magnetic layer when the non-magnetic layer has had wet surface, wherein the non-magnetic inorganic powder comprises at least two kinds of non-magnetic inorganic powders having different mean particle sizes, one of which has a mean particle size in the range of 10 to 80% of the thickness of the non-magnetic layer and another of which has a mean particle size in the range of 0.5 to 10% of the thickness of the non-magnetic layer, the former powder and the latter powder being in a weight ratio of 3:97 to 40:60,
which comprises recording a set of digital signals having a minimum recording wavelength of not longer than 1.5 µm on the magnetic layer of the magnetic recording disk under such condition that a magnetic head is kept in contact with the magnetic layer, and reproducing the recorded digital signals from the magnetic layer under such condition that a magnetic head is kept in contact with the magnetic layer.

13. The magnetic recording and reproducing method of claim 12, wherein the mean particle size of one non-magnetic inorganic powder in the non-magnetic layer of the magnetic recording disk differs from the mean particle size of another non-magnetic inorganic powder by at least 5% of the thickness of the non-magnetic layer.

14. The magnetic recording and reproducing method of claim 12, wherein the non-magnetic inorganic powders in the non-magnetic layer both have a Mohs hardness of not less than 5.
